# EUROPÄISCHE PATENTSCHRIFT

(11) **EP 1 320 142 B1**
(45) Veröffentlichungstag und Bekanntmachung des Hinweises auf die Patenterteilung: **07.05.2008**
(21) Anmeldenummer: 02014912.6
(22) Anmeldetag: 05.07.2002
(51) Int. Cl.: H01M 8/02

(54) **Dichtungsanordnung für Brennstoffzellen**
Sealing structure for fuel cells
Structure d'étanchéité pour piles à combustible

(30) Priorität: 12.12.2001 DE 10160905
(43) Veröffentlichungstag der Anmeldung: 18.06.2003
(73) Patentinhaber: Carl Freudenberg KG, 69469 Weinheim (DE)
(72) Erfinder: Pflästerer, Jens, 69509 Mörlenbach/Weiher (DE)

(56) Entgegenhaltungen:
- EP-A- 0 951 086
- FR-A- 2 799 257
- GB-A- 2 368 968
- US-A- 3 846 176
- US-A- 4 774 154
- US-A- 6 086 643
- US-A1- 2001 001 052
- US-A1- 2002 068 212

## Beschreibung

Die Erfindung betrifft eine Dichtungsanordnung für Brennstoffzellen, enthaltend zumindest einen Verbund, gebildet aus zwei Zell-Trennplatten mit einer dazwischengelegten, verformbaren Membran-Elektroden-Einheit, bestehend aus zwei porösen, gasdurchlässigen Platten oder Lagen und einer dazwischengelegten lonenaustauschmembran, wobei die Seitenflächen der Membran-Elektroden-Einheit gegenüber den Seitenflächen der Zell-Trennplatten zurückspringen, um einen Dichtspalt freizulassen, und ein elastisches Dichtelement aus einem ersten Polymer, welches den Verbund nach Art eines umlaufenden Dichtbandes umschließt, wobei das Dichtelement eine umlaufende Dichtleiste aufweist, die in den Dichtspalt ragt, um durch Verpressung zwischen den Zell-Trennplatten den Dichtspalt gasdicht abzuschließen.

### Stand der Technik

Brennstoffzellen sind elektrochemische Energiewandler und seit langem bekannt. Sie erzeugen elektrische Energie durch Oxidation eines Brennstoffes. Sie bestehen im einfachsten Fall aus planaren, elektrisch leitenden Elektroden, die gasdurchlässig sind und die durch eine ionenleitende Membran voneinander getrennt sind. Die Zufuhr der Reaktionsmedien erfolgt über Verteilerplatten mit integrierten Gas- bzw. Flüssigkeitsleitkanälen. Diese Verteilungsnetze müssen sowohl gegeneinander als auch nach außen hin abgedichtet sein. Um eine technisch anwendbare Größenordnung einer elektrischen Spannung bzw. eines elektrischen Stromes zu erzeugen, sind meist mehrere großflächige, dünne Platten oder Lagen in Form eines Stapels, auch als "stack" bezeichnet, übereinander angeordnet und die einzelnen Zellen in einer Serien- oder Parallelschaltung verschaltet. Die vom Wandler erzeugte elektrische Energie wird an elektrisch leitenden Elektroden des Stapels abgenommen.

Eine derartige elektrochemische Brennstoffzelle besteht im einfachsten Fall aus zwei Elektroden, augebildet als eine planare Gasdiffusionsschicht, in der Literatur auch als "Gas Diffusion Layer", im Folgenden abgekürzt GDL, zwischen denen eine ionenleitende Schicht angeordnet ist, wobei sich an jede Elektrode ein Gasraum anschließt, in welchem jeweils ein Reaktionsmedium durch Verteilerkanäle zugeführt wird. Dichtungen zwischen den einzelnen Zellelementen verhindern das Austreten des Reaktionsmediums.

Bei bestimmten Brennstoffzellen ist die ionenleitende Membran ein Polymer. Die vorliegende Erfindung betrifft die Abdichtung einer derartigen Polymer-Elektrolyt-Membran-Brennstoffzelle, im Folgenden kurz PEM-Zellen genannt. Diese Art der chemischen Brennstoffzellen gewinnt zunehmend an Bedeutung als zukünftige Energiequelle für den Antrieb von Kraftfahrzeugen. Gefordert wird für diese Anwendung ein möglichst günstiges Massen-LeistungsVerhältnis und eine über eine Gebrauchsdauer von mehreren Jahren hinweg zuverlässige Abdichtung der Verteilungsnetze.

Üblicherweise werden bei Polymer-Elektrolyt-Membran-Brennstoffzellen die beiden porösen, gasdurchlässigen Elektroden und die dazwischengelegte, sehr dünne, protonenleitende Polymer-Elektrolyt-Membran zu einer sogenannten Membran-Elektroden-Einheit, im Folgenden abgekürzt MEA (Membrane-Electrode-Assembly), zusammengefasst. Im Stapel angeordnet sind diese Einheiten durch sogenannte Zell-Trennplatten getrennt. Letztere weisen in der Oberfläche die o.g. Verteilerstrukturen für die Reaktionsgase auf. Der Stapel wird stirnseitig jeweils durch Endplatten abgeschlossen und durch Verbindungsschrauben unter Anpressung der Lagen zusammengehalten. Für die elektronenleitenden Zell-Trennplatten werden häufig Nicht-Metalle wie beispielsweise Graphit, aber auch Metalle wie Edelstahl oder Titan verwendet. Als Elektrodenwerkstoff eignet sich für die Anode bzw. Katode plastisch verformbares und elektrisch leitfähiges Material, beispielsweise Graphitfolien oder Vlieswerkstoffe. Die an der Polymer-Elektrolyt-Membran anliegende Oberfläche der Elektroden ist mit einem Katalysator, beispielsweise einem Platin-Material, beschichtet. Zell-Trennplatten im Inneren des Stapels stehen mit einer ihrer Oberflächen in elektrischem Kontakt mit der Anode einer Zelle des Stapels, ihre gegenüberliegende Oberfläche hingegen mit der Katode einer anderen benachbarten Zelle. Gemäß dieser Funktion werden diese Zell-Trennplatten im Inneren des Stapels auch als sogenannte Bipolar-Platten, im Folgenden kurz BPP, bezeichnet. Neben ihrer Funktion, den elektrischen Strom im Stapel zu leiten, haben sie die Funktion, die Reaktionsgase zu trennen.

Für eine PEM-Brennstoffzelle wird üblicherweise als Reaktionsgas Wasserstoff und als Oxidationsmittel typischerweise Sauerstoff oder Luft verwendet. Wasserstoff wird dem durch die Verteilerstruktur auf der Anode gebildeten Anodenraum zugeführt, während der Sauerstoff bzw. die Luft dem Katodenraum zugeleitet wird. Durch die gasdurchlässigen Elektroden gelangen die Reaktionspartner über die Katalysatorschicht an die protonenleitfähige lonenaustauschmembran. Kationen, die sich an der Katalysatorschicht der Anode bilden, durchwandern die lonenaustauschmembran und bilden mit dem an der Katodenseite zugeführten Oxidationsmittel einerseits als Reaktionsprodukt Wasser, andererseits elektrische Energie und Wärmeenergie. Durch einen äußeren Stromkreis ist die elektrische Energie einem Verbraucher zuführbar, während die Wärmeenergie im Stapel durch geeignete Kühlkanäle zwischen den Zell-Trennplatten abgeführt werden muss.

An die Dichtungen zwischen den einzelnen Zellelementen werden hohe Anforderungen gestellt. PEM-Brennstoffzellen, die für die Energieversorgung eines Kraftfahrzeuges vorgesehen sind, sind rauen Umgebungsbedingungen ausgesetzt. Die Dichtung muß starken Erschütterungen, Feuchteschwankungen und Temperaturschwankungen standhalten. Aufgrund der unterschiedlichen Materialausdehnung kann es zu Undichtigkeiten kommen.

In DE 197 13 250 wird zur Abdichtung der Gasräume sowie der Fluidsammelkanäle ein gas- und flüssigkeitsdichter adhäsiver Verbund der Membran-Elektroden-Einheit mit den angrenzenden Zell-Trennplatten nach Art einer umlaufenden Dichtung vorgeschlagen. Das adhäsive Verbundmaterial wird durch einen Kleber realisiert, der in einem Randbereich die Zellelemente modulartig miteinander verbindet und gasdicht abdichtet. Die Seitenflächen der Membran-Elektroden-Einheit sind gegenüber den Seitenflächen der Zell-Trennplatten zurückspringend angeordnet und bilden dadurch einen Dichtspalt, der vom adhäsiven Verbundmaterial ausgefüllt wird und die Polymer-Elektrolyt-Membran vor dem Austrocknen schützt. Durch eine Beschichtung der Stirnseiten des Stapels mit adhäsivern Verbundmaterial lassen sich mehrere derartige Module verbinden. Von Nachteil ist die Handhabung des Klebers bei der Herstellung, der präzise im Randbereich aufgetragen werden muß. Ein weiterer Nachteil ist die nichtlösbare Verbindung in einem Stapel von Brennstoffzellen, was zur Folge hat, dass bei einem Defekt einer Zelle der gesamte Stapel verworfen werden muss.

Aus der US-A-4 774 154 ist ein Brennstoffzellen-Stack bekannt, der mehrere Einheiten bestehend aus zwei Zell-Trennplatten und einer sandwichartig dazwischen angeordneten Membran-Elektroden-Einheit (MEA) umfasst. Die beiden Zell-Trennplatten ragen jeweils über den Rand der MEA hinaus, so dass im Randbereich dieser Anordnung ein Dichtspalt besteht. Der gesamte Brennstoffzellen-Stack ist in ein Dichtelement eingebunden, das die Zell-Trennplatten und die MEA wie ein umlaufendes Dichtband umschließt und auch den Dichtspalt zwischen den beiden Zell-Trennplatten mit einer umlaufenden Dichtleiste ausfüllt.

Die europäische Patentanmeldung EP-A-0 951 086 beschäftigt sich mit dem Aufbau von Brennstoffzellen, die bei Zimmertemperatur arbeiten. Hier wird ebenfalls ein Dichtelement in Form eines umlaufenden Dichtbandes beschrieben, das den Verbund aus zwei Zell-Trennplatten und einer dazwischen angeordneten MEA umschließt. Jedoch sollen hier alle Lagen des Brennstoffzellenaufbaus möglichst bündig miteinander abschließen, so dass der Randbereich geschlossen ist und keinen Dichtspalt aufweist. Dementsprechend ist das Dichtband auch nicht mit einer umlaufenden Dichtleiste mit gestuftem Profil ausgestattet.

### Darstellung der Erfindung

Es ist Aufgabe der Erfindung, die Dichtwirkung der bekannten Dichtungsanordnungen für Brennstoffzellen zu verbessern.

Es ist eine weitere Aufgabe der Erfindung, ein Verfahren zur Herstellung anzugeben, welches eine Serienfertigung mit geringen Herstellungskosten erlaubt. Ferner ist es das Ziel der Erfindung, einen elektrochemischen Energiewandler zu schaffen, der für die mobile Anwendung geeignet ist und bei dem Wartung und Reparatur einfach möglich sind.

Diese Aufgabe wird erfindungsgemäß mit Hilfe des elastischen Dichtelements gelöst, das den Verbund nach Art eines umlaufenden Dichtbandes umschließt und eine Dichtleiste aufweist, welche in einem Dichtspalt zwischen Zell-Trennplatten verpresst wird und dadurch den Dichtspalt gasdicht abschließt.

Die Erfindung geht dabei von einer Anordnung der Platten oder Lagen aus, bei der die Umfangsseitenflächen der Membran-Elektroden-Einheit gegenüber den Umfangsseitenflächen der Zell-Trennplatten zurückspringen. Auf diese Weise wird an der Umfangsseitenfläche des Verbundes ein Dichtspalt freigelassen. In diesen ragt ein vorspringender Ansatz des elastischen Dichtelementes, die Dichtleiste. Aufgrund der Verformbarkeit der Elektroden der Membran-Elektroden-Einheit wird der Dichtspalt enger, sobald stirnseitig auf die Endplatten eine Presskraft ausgeübt wird. Freiliegende Randflächen der Zell-Trennplatten im Dichtspalt werden zu Pressflächen und bewirken eine Verpressung der dazwischenliegenden elastischen Dichtleiste. Das zwischen den Pressflächen der Zell-Trennplatten verpresste, gasdichte, elastische Dichtmaterial bildet eine wirksame Barriere und verhindert das Austreten der Reaktionsgase im Pressspalt. Die Verpressung im Dichtspalt bewirkt auch ein laterales Ausweichen des elastischen Dichtmaterials und erhöht dadurch auch lateral die Anpresskraft auf die Umfangsseitenflächen der Membran-Elektroden-Einheit. Auf diese Weise wird eine zuverlässige Dichtwirkung auch dann erreicht, wenn sich die einzelnen Platten oder Lagen des Verbundes aufgrund mechanischer Belastung während der Montage oder aufgrund von Erschütterungen oder thermischer Ausdehnung während des Betriebes verformen bzw. dehnen. Hinsichtlich einer Dehnung ist besonders die lonenaustauschmembran empfindlich. Da das elastische Dichtmaterial gemäß der erfindungsgemäßen Ausbildung nur die Umfangsseitenfläche der Membran kontaktiert, nicht aber deren Oberfläche, wird eine Beschädigung der PEM durch Verformung oder Ausdehnung der Platten nahezu ausgeschlossen. Das umschließende Dichtband verhindert auch ein Austrocknen der Polymer-Elektrolyt-Membran. Auch dann, wenn das elastische Dichtmaterial an den Seitenflächen nicht oder sehr schlecht haftet - dies ist beispielsweise der Fall, wenn die Zell-Trennplatten aus Graphit bestehen - ist durch die mechanische Verpressung der umlaufenden Dichtleiste der Dichtspalt gasdicht. In einem Stapel kann - je nach ihrer Lage im Mittel- oder Endbereich des Stapels - jede Zelle mit unterschiedlich großen Pressflächen ausgebildet werden. Auf diese Weise erreicht man, dass die im Stapel inhomogene Dichtungspresskraftverteilung längs des Stapels ausgeglichen wird. Bei einem Plattenverbund, der im Endbereich des Stapels liegt und mit einem erhöhten Anpressdruck belastet wird, kann durch entsprechend groß dimensionierte Pressflächen im Dichtspalt eine unzulässig hohe Verpressung des Dichtmaterials verhindert werden. Durch geeignete Bemessung der jeweiligen Pressflächen lässt sich erreichen, dass die Dichtfunktion im Mittel- und Endbereich des Stapels trotz unterschiedlich großer Presskräfte etwa gleich groß ist. Das erfindungsgemäß ausgebildete Dichtelement ermöglicht ferner ein Zusammenfassen von mehreren Zellen zu Verbünden. Ein einfacher, modulartiger Wechsel defekter Zellen ist dadurch möglich. Herstellungskosten für die Dichtung sind vergleichsweise gering. Durch den im Verbund an der Umfangsseitenfläche einspringenden Dichtspalt verringern sich die Flächenabmessungen der Polymer-Elektrolyt-Membran und damit die Materialkosten der Brennstoffzelle. Die erfindungsgemäße Dichtungsanordnung erhöht nur sehr geringfügig das Gesamtgewicht des elektrochemischen Energiewandlers, was für eine mobile Anwendung vorteilhaft ist. Für das Dichtelement sind keine Eintiefungen in den Zell-Trennplatten erforderlich, was für die Herstellung günstig ist.

Eine besonders zuverlässige Dichtwirkung wird erfindungsgemäß dadurch erzielen, dass die porösen, gasdurchlässigen Platten der GDLs jeweils in einem Endbereich am Rand der Oberflächen mit einem zweiten Polymer einseitig oder zweiseitig imprägniert und/oder beschichtet sind und die Seitenflächen der lonenaustauschmembran gegenüber den Seitenflächen der porösen Platten zurückspringend angeordnet sind und dadurch einen zweiten Dichtspalt freilassen, in welchen eine zweite Dichtleiste ragt, um durch Verpressung zwischen den Zell-Trennplatten den zweiten Dichtspalt gasdicht abzuschließen. Der Verpressung des ersten Dichtspalts wird die Verpressung eines zweiten Dichtspalts vorgeschaltet. Durch diese Maßnahme erzielt man eine zuverlässige Abschottung der Reaktionsgase zwischen den Lagen der GDL einer MEA. Insgesamt verbessert sich die Dichtwirkung. Auch hier tritt die Polymer-Elektrolyt-Membran nur an ihrer Umfangsseitenfläche mit dem elastischen Dichtmaterial in Kontakt. Gegenüber dem vorbekannten Stand der Technik wird die Dichtungsfläche der Polymer-Elektrolyt-Membran dadurch weiter reduziert und Materialkosten gespart.

Im Hinblick auf eine einfache und kostengünstige Herstellung ist von ausschlaggebender Bedeutung, dass das Dichtband und die Dichtleiste als Spritzgießteil einstückig und materialeinheitlich aus einem Polymer gebildet wird. Durch das Spritzgießen dringt das elastische Dichtmaterial in kleinste Bereiche des Dichtspaltes ein und füllt diesen vollständig aus.
Im Hinblick auf die Herstellungskosten ist von Vorteil, dass Herstellung und Anbringung der Dichtungsanordnung in einem Arbeitsgang erfolgen. Durch das an den Seitenflächen und den Pressflächen fest anhaftende Dichtungsmaterial werden die einzelnen Lagen nicht nur abgedichtet, sondern auch zusammengehalten.

Mit Vorteil wird das Dichtelement so ausgebildet, dass es sich über einen äußeren Rand einer Stirnfläche einer äußeren ersten Zelltrennplatte und über einen äußeren Rand einer Stirnfläche einer äußeren zweiten Zelltrennplatte erstreckt, um den Verbund oder die Verbünde klammerförmig zusammenzuhalten. Dadurch werden Module gebildet. Hinsichtlich Reparatur und Wartung in einem Brennstoffzellen-Stapel ist dies von besonderem Vorteil, da dadurch defekte Module auf einfache Weise gewechselt werden können.

Hierbei ist von Vorteil, wenn das Dichtelement im Bereich eines ersten Klammerrandes mit einem umlaufenden Dichtprofil und im Bereich eines zweiten Klammerrandes als eine ebene Fläche ausgebildet ist. Auf diese Weise läßt sich ein Kühlmedium, das zwischen Modulen zirkuliert, durch das Dichtprofil einfach abdichten.
Von Vorteil ist, wenn das Polymer ein Elastomer ist. Elastomere sind in der Dichtungstechnik weit verbreitet. Die Werkstoffe EPDM (Ethylen-Propylen-Dien-Kautschuk), FPM (Fluor-Kautschuk), TPE (Thermoplastisches Elastomer) sind durch Spritzgießen besonders einfach zu verarbeiten. Auch die Verwendung von Silikon oder anderen Kunststoffen wie beispielsweise Epoxyd-Harz ist denkbar.

Für eine besonders gute Dichtwirkung ist es ferner vorteilhaft, wenn die porösen Platten in einem Endbereich von einem zweiten Polymer vollständig durchtränkt sind. Dadurch verlagert sich die Abdichtung der Reaktionsgase nicht ausschließlich auf den Dichtspalt, sondern findet zumindest teilweise bereits in der porösen Platte statt. Geeignet für das zweite Polymer sind Werkstoffe aus Silikon oder FPM (Fluor-Kautschuk), Epoxyd-Harz oder PTFE (Polytetrafluortethylen).

Mit besonderem Vorteil ist das Polymer und das zweite Polymer gleiches Material. Auf diese Weise kommt es zu einer chemischen Verbindung zwischen dem Material des Dichtelementes und dem zweiten Polymer, mit dem die porösen Platten durchtränkt sind. Folge davon ist eine sehr zuverlässige und langlebige Dichtwirkung, die auch starken Erschütterungen im mobilen Betrieb standhält.

Günstig ist, wenn der Dichtspalt eine Breite von etwa 50 µm bis 4 mm aufweist und das elastische Dichtelement durch einen Werkstoff mit einer Shore-Härte von etwa 20 bis 100 Shore A gebildet wird.

Die erfindungsgemäße Dichtungsanordnung ist besonders geeignet für einen elektrochemischen Energiewandler, der eine Brennstoffzelle oder mehrere als Stapel angeordnete Brennstoffzellen enthält. Im seltenen Fall, dass der Energiewandler durch eine Brennstoffzelle gebildet wird, ermöglicht die Erfindung, dass die Dichtungsanordnung die Platten der Brennstoffzelle nicht nur gasdicht abdichtet, sondern auch zusammenhält. Im weitaus wichtigeren Fall, bei dem der Energiewandler mehrere übereinander angeordnete, zu einer Serien- oder Parallelschaltung verschaltete Brennstoffzellen umfasst, ermöglicht die Erfindung das Zusammenfassen mehrerer Brennstoffzellen zu Modulen, was Wartung und Reparatur erleichtert.

Für eine Serienfertigung mit geringen Herstellungskosten schlägt die Erfindung ein Verfahren vor, bei dem:
a) der Randbereich von zwei porösen Platten mit einem ersten polymeren Dichtungsmaterial beschichtet oder teilimprägniert oder durchtränkt wird,
b) zwischen die beiden porösen Platten eine lonenaustausch-Membran gelegt wird, um eine Membran-Elektroden-Einheit zu bilden,
c) eine Einheit gebildet wird, indem zwischen zwei Zell-Trennplatten die in b) gebildete Membran-Elektroden-Einheit gelegt wird,
d) diese Einheit oder mehrere dieser Einheiten in Form eines Stapels in die Kavität eines Spritzgußwerkzeugs eingelegt wird,
e) die eingelegte Einheit oder Einheiten in der Kavität stirnseitig mit einem Anpressdruck beaufschlagt werden, der so groß ist, dass das polymere Dichtungsmaterial einem Einspritzdruck mit einem zweiten polymeren Material standhält,
f) ein Verbund oder Verbünde gebildet werden, indem eine Schmelze eines zweiten polymeren Dichtungsmaterials in die Kavität des Spritzgußwerkzeugs eingespritzt wird,
g) Erstarren lassen der Schmelze,
h) Entformen und Entnahme des in f) gebildeten Verbundes oder der Verbünde von Brennstoffzellen,
i) erforderlichenfalls weiteres Ausheizen der Dichtungsanordnung.

Das Spritzgießen des polymeren Dichtungsmaterials ist für eine wirtschaftliche Fertigung von Brennstoffzellen von entscheidender Bedeutung. Das Vulkanisationswerkzeug ist konventionell entformbar und daher einfach aufgebaut. Die Herstellung und Anbringung der erfindungsgemäßen Dichtungsanordnung erfolgt in einem Produktionsabschnitt. Ein Modul, gebildet aus Verbünden mehrerer Zellen, kann samt Kühlmitteldichtung in einem Spritzgießvorgang erzeugt werden.

Bei einer Gestaltung des Herstellungsverfahrens gemäß Anspruch 14 verkürzt sich die Verfahrenszeit, da nicht die porösen Platten, sondern eine Membran-Elektroden-Einheit mit dem ersten polymeren Dichtungsmaterial in einem Randbereich beschichtet oder teilimprägniert oder durchtränkt wird.

Das Beschichten mit polymerem Dichtungsmaterial erfolgt bevorzugt durch Siebdrucken, besonders bevorzugt durch Rotationssiebdrucken. Ganz besonders einfach kann das polymere Dichtungsmaterial durch Stempeldrucken aufgetragen werden. Das Durchtränken kann auf einfache Weise durch Tauchen oder durch Spritzgießen erfolgen.
Als Werkstoff sind für die Beschichtung oder für den Verbund FPM (Fluor-Kautschuk), EPDM (Ethylen-Propylen-Dien-Kautschuk), Silikon, PTFE (Polytetrafluorethylen), Epoxyd-Harz oder TPE (Thermoplastisches Elastomer) geeignet.

Eine sehr zuverlässige und sehr langlebige Dichtung lässt sich dadurch erzeugen, wenn die Werkstoffe für Beschichtung und Verbund eine chemische Verbindung eingehen. Dies ist dann der Fall, wenn derselbe Werkstoff verwendet wird.

### Kurzbeschreibung der Zeichnung

Zur weiteren Erläuterung der Erfindung wird auf die Zeichnungen Bezug genommen, in deren Figuren verschiedene Ausführungsformen gemäß der Erfindung schematisch dargestellt sind. Anhand dieser schematischen Zeichnungen wird die Erfindung näher erläutert.

Es zeigen:
- Figur 1: einen Schnitt durch die Randzone einer Brennstoffzelle mit einem Ausführungsbeispiel der erfindungsgemäßen Dichtungsanordnung,
- Figur 2: die Randzone von mehreren in einem Stapel angeordneten Brennstoffzellen mit einem zweiten Ausführungsbeispiel der erfindungsgemäßen Dichtungsanordnung.

### Ausführung der Erfindung

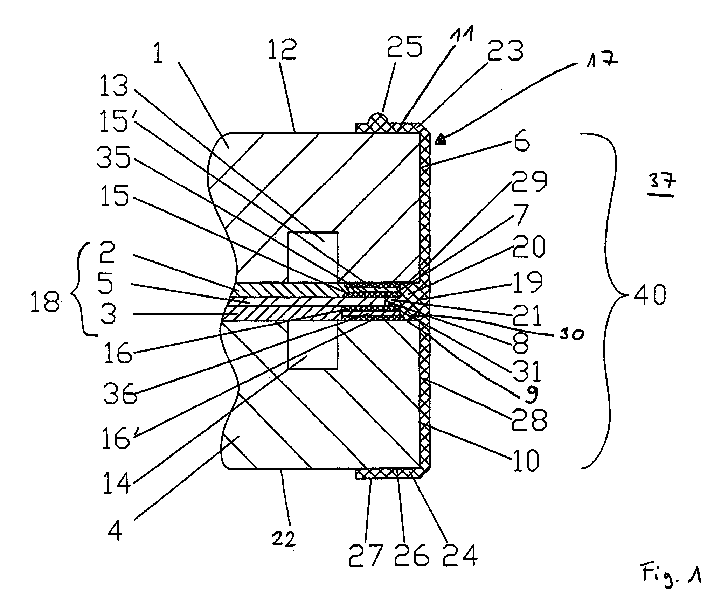

Figur 1 zeigt eine Randzone einer Brennstoffzelle mit einer Dichtungsanordnung gemäß einem ersten Ausführungsbeispiel der Erfindung. Das umlaufende Dichtelement 17 umschließt den aus Platten gebildeten Verbund 40 nach Art eines umlaufenden Dichtbandes 28. Der Verbund der Platten wird gebildet aus zwei außenliegenden Zell-Trennplatten 1, 4 mit einer dazwischengelegten Membran-Elektroden-Einheit 18. Diese besteht ihrerseits aus weiteren drei Platten, einer ersten porösen Platte 2, einer lonen-Austausch-Membran 5 und einer zweiten porösen Platte 3. Die GDL-Platten 2, 3 sind gasdurchlässig für die in der Verteilerstruktur 13, 14 zugeführten Reaktionsgase. Die Verteilerstruktur 13 bzw. 14 ist in Figur 1 schematisch als eine Ausnehmung an der zur Membran-Elektroden-Einheit 18 weisenden Oberfläche der Zell-Trennplatten 1 bzw. 4 dargestellt. Die Umfangsseitenfläche 8 der lonenaustauschmembran ist gegenüber den Umfangsseitenflächen 7, 9 der porösen Platten 2, 3 zurückversetzt angeordnet. Alle drei Umfangsseitenflächen 7, 8, 9 springen gegenüber den Umfangsseitenflächen 6, 10 der Zell-Trennplatten 1, 4 zurück. Auf diese Weise entsteht ein Dichtspalt 19, der sich in einem Mittelbereich in einem zweiten Dichtspalt 21 fortsetzt. Das Dichtelement 17 ist erfindungsgemäß so ausgebildet, dass eine umlaufende Dichtleiste 20 in den Dichtspalt ragt. In der bestimmungsgemäßen Verwendung der Brennstoffzelle werden die äußeren Zell-Trennplatten 1, 4 durch in Figur 1 nicht dargestellte Endplatten und Verbindungsschrauben aneinander gepresst. Folge davon ist, dass die Dichtleiste 20 im Dichtspalt 19 durch die Pressflächen 29, 30 verpresst wird. Das Material des elastischen Dichtelements ist selbst gasundurchlässig und die Anpressung im Dichtspalt verhindert ein Entweichen der Reaktionsgase aus den Verteilerkanälen 13 bzw. 14 oder der porösen Platten 2, 3 in den umgebenden Außenraum 37. Der durch die versetzte Anordnung der Umfangsseitenflächen der Membran-Elektroden-Einheit 18 geschaffene zweite Dichtspalt 21 ist ebenfalls mit dem elastischen Material des Dichtelementes 17 augefüllt. Auch diese zweite Dichtleiste 31 erfährt eine plastische Verformung, da die Anpressung der äußeren Zell-Trennplatten sich auf die porösen Platten 2, 3 überträgt und diese Platten die Anpresskraft auf den zweiten Dichtspalt 21 übertragen. In Verbindung mit den imprägnierten Endbereichen 15 bzw. 16 der porösen Platten 2 bzw. 3 verhindert die Anpressung im zweiten Dichtspalt 21 ein Überströmen der Reaktionsgase zwischen Anode und Katode. Die Verformbarkeit der porösen Platten 2, 3 bestimmt im Wesentlichen die Weiterleitung der Anpresskräfte in den zweiten Dichtspalt 21. Die Imprägnierung ist in Figur 1 durch Schraffur der Flächen 15, 16 gekennzeichnet. Die Gasdiffusionsschichten 2, 3 können aber auch an der jeweils zur Zell-Trennplatte liegenden Oberfläche mit einem polymeren Werkstoff durchtränkt oder beschichtet sein. Durch die beidseitige Beschichtung oder Durchtränkung der Endbereiche 35, 36 verbessert sich die Dichtwirkung in der Randzone. Auch die zur Zell-Trennplatte liegende Beschichtung bzw. die Durchtränkung ist in Figur 1 durch die schraffierten Flächen 15' bzw. 16' gekennzeichnet.

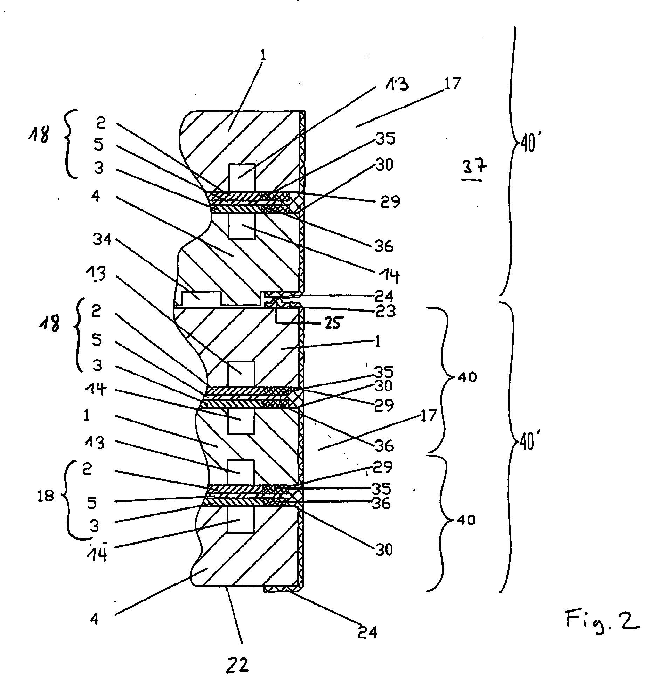

Insbesondere dann, wenn das elastische Dichtmaterial des Elementes 17 an den Umfangsseitenflächen 6, 10 und an den Pressflächen 29, 30 adhäsiv haftet und im Endbereich 35, 36 der porösen Platten 2, 3 eindringt, erhält man einen sehr dauerhaften und gasdichten Verbund der Platten der Brennstoffzelle. Durch die Dichtungsanordnung werden die Reaktanten nicht nur abgedichtet, sondern gleichzeitig der komplexe Zellenaufbau zusammengehalten. Da zusätzliche mechanische Klammern entfallen, verringern sich das Gewicht und die Kosten des Energiewandlers. Das klammerförmig ausgebildete Dichtelement ist in Figur 1 einfach zu erkennen. Das elastische Dichtelement 17 umgreift die Randflächen 11 bzw. 26 der äußeren Zell-Trennplatten 1 bzw. 4. Der Klammerrand 23 unterscheidet sich vom Klammerrand 24 durch ein angeformtes Dichtprofil 25, wodurch bei einer Stapelung von Brennstoffzellen auf einfache Weise das an der Stirnfläche 12 der Zell-Trennplatte 1 vorbeigeführte Kühlmedium abgedichtet werden kann. Der untere Klammerrand 24 weist kein Dichtprofil auf, sondern ist als ebene Dichtfläche 27 ausgebildet. An dieser liegt dichtend das Dichtprofil 25 einer darunter angeordneten Einheit, was in Figur 2 dargestellt ist.

In Figur 2 ist eine zweite bevorzugte Ausführungsform der Erfindung gezeigt, bei der mehrere Brennstoffzellen zu einem Stapel angeordnet sind. Der modulartige Aufbau des Energiewandlers ist in Figur 2 sehr gut erkennbar. Das elastische Element 17 hält nicht nur den Verbund 40 von Platten einzelner Brennstoffzellen zusammen, sondern es werden modulartige Verbünde 40' gebildet, die das Dichtelement 17 zusammenhält. Wie in der Beschreibung der Figur 1 bereits hervorgehoben, ist der Klammerrand 23 gegenüber dem Klammerrand 24 unterschiedlich ausgebildet. Das im Kühlmittelkanal 34 geführte Kühlmedium wird durch Anlage der Klammerränder 24, 23 gegenüber dem Außenraum 37 abgedichtet. Die Ausbildung und die Anordnung der Umfangsseitenflächen relativ zueinander der Zell-Trennplatten 1, 4, der porösen Platten 2, 3 sowie der lonenaustauschmembran 8 entspricht der in Figur 1. Zur besseren Übersichtlichkeit sind jedoch nicht alle Bezugszeichen in der Figur aufgeführt. Die Randbereiche 35 bzw. 36 der porösen Platten 2 bzw. 3 sind mit einem polymeren Dichtungsmaterial durchtränkt, was in Figur 2 ebenfalls durch schraffierte Abschnitte angedeutet ist. Die Imprägnierung verhindert, dass das in den Poren der Platte 2 bzw. 3 geführte Reaktionsgas seitlich austritt. Zwischen den jeweiligen Pressflächen 29 und 30 wird dadurch nicht nur das elastische Dichtungsmaterial im Dichtspalt verpresst, sondern auch die mit Polymer durchtränkten Endbereiche 35, 36. Die Wirksamkeit der Dichtungsanordnung wird dadurch weiter verbessert.

Der Übersichtlichkeit wegen sind weder in Figur 1 noch in Figur 2 Katalysatorschichten eingezeichnet, welche an der zur Polymer-Elektrolyt-Membran liegenden Oberfläche der Gasdiffusionsschicht 2 bzw. 3 angeordnet sind. Auch Endplatten und Verbindungsschrauben, die den Stapel bzw. die Brennstoffzelle zusammenhalten, sind in den Figuren nicht gezeigt.

Die Herstellung eines Dichtelements 17, das, wie in Figur 2 gezeigt, Verbünde 40 von Brennstoffzellen zusammenfasst, kann vorteilhaft in Spritzgußtechnik hergestellt werden. Die Erfindung ermöglicht es, dass das elastische Dichtelement 17 in einem Arbeitsschritt hergestellt und angebracht wird. Dabei wird im Dichtspalt die Membran-Elektroden-Einheit 18 gasdicht abgedichtet und gleichzeitig ein Klammerrand 23 bzw. 24 ausgebildet, welcher das Modul 40' zusammenhält und durch ein Dichtprofil 25 das Austreten des Kühlmediums in den Außenraum 37 verhindert. Damit steht der Serienproduktion ein einfaches und kostengünstiges Herstellungsverfahren zur Verfügung.

## Patentansprüche

1. Dichtungsanordnung für Brennstoffzellen, enthaltend
- zumindest einen Verbund (40) gebildet aus zwei Zell-Trennplatten (1, 4; BPP) mit einer dazwischengelegten, verformbaren Membran-Elektroden-Einheit (18; MEA), bestehend aus zwei porösen, gasdurchlässigen Platten oder Lagen (2, 3; GDL) und einer dazwischengelegten lonenaustauschmembran (5; PEM), wobei die Seitenflächen (7, 8, 9) der Membran-Elektroden-Einheit gegenüber den Seitenflächen (6, 10) der Zell-Trennplatten zurückspringen, um einen Dichtspalt (19) freizulassen,
- ein elastisches Dichtelement (17) aus einem ersten Polymer, welches den Verbund nach Art eines umlaufenden Dichtbandes (28) umschließt, wobei das Dichtelement (17) eine umlaufende Dichtleiste (20) aufweist, die in den Dichtspalt (19) ragt, um durch Verpressung zwischen den Zell-Trennplatten (1, 4; BPP) den Dichtspalt (19) gasdicht abzuschließen,
**dadurch gekennzeichnet, dass** die porösen, gasdurchlässigen Platten (2, 3) jeweils in einem Endbereich (35, 36) mit einem zweiten Polymer einseitig (15, 16) oder zweiseitig (15, 15' 16, 16') imprägniert und/oder beschichtet (Fig. 1) sind, die Seitenfläche (8) der lonenaustauschmembran (5) gegenüber den Seitenflächen (7, 9) der porösen Platten (2, 3) zurückspringt und einen zweiten Dichtspalt (21) freilässt, in welchen eine zweite Dichtleiste (31) ragt, um durch Verpressung zwischen den porösen Platten den zweiten Dichtspalt (21) gasdicht abzuschließen.

2. Dichtungsanordnung nach Anspruch 1, **dadurch gekennzeichnet, dass** das Dichtband (28) und die Dichtleiste (20) als Spritzgießteil einstückig und materialeinheitlich gebildet sind und die Dichtleiste (20) den Dichtspalt (19) vollständig ausfüllt.

3. Dichtungsanordnung nach Anspruch 1 oder 2, **dadurch gekennzeichnet, dass** das Dichtelement (17) sich über einen äußeren Rand (11) einer Stirnfläche (12) einer äußeren Zell-Trennplatte (1) und über einen äußeren Rand (26) einer Stirnfläche (22) einer äußeren Zell-Trennplatte (4) erstreckt, um den Verbund oder die Verbünde klammerförmig zusammenzuhalten.

4. Dichtungsanordnung nach einem der Ansprüche 1 bis 3, **dadurch gekennzeichnet, dass** das Dichtelement (17) im Bereich eines ersten Klammerrandes (23) mit einem umlaufenden Dichtprofil (25) und im Bereich eines zweiten Klammerrandes (24) als eine ebene Fläche (27) ausgebildet ist.

5. Dichtungsanordnung nach einem der Ansprüche 2 bis 4, **dadurch gekennzeichnet, dass** das erste Polymer aus einem Elastomer, besonders bevorzugt aus einem EPDM (Ethylen-Propylen-Dien-Kautschuk), FPM (Fluor-Kautschuk), TPE (Thermoplastisches Elastomer) oder aus Silikon oder aus einem Kunststoff, ganz besonders bevorzugt aus Epoxyd-Harz, besteht.

6. Dichtungsanordnung nach einem der Ansprüche 1 bis 5, **dadurch gekennzeichnet, dass** die porösen Platten (2, 3) in einem Endbereich (35, 36) von dem zweiten Polymer vollständig durchtränkt sind.

7. Dichtungsanordnung nach Anspruch 6, **dadurch gekennzeichnet, dass** das zweite Polymer durch Silikon oder FPM (Fluor-Kautschuk) oder Epoxyd-Harz oder PTFE (Polytetrafluorethylen) gebildet ist.

8. Dichtungsanordnung nach einem der Ansprüche 2 bis 5 und 6 oder 7, **dadurch gekennzeichnet, dass** das erste Polymer und das zweite Polymer gleiches Material ist.

9. Dichtungsanordnung nach einem der vorstehenden Ansprüche, **dadurch gekennzeichnet, dass** das Dichtungselement (17) mit den Seitenflächen (6, 7, 8, 9, 10) und den Pressflächen (29, 30) fest anhaftend verbunden ist, um den Verbund abzudichten und zusammenzuhalten.

10. Dichtungsanordnung nach einem der vorstehenden Ansprüche, **dadurch gekennzeichnet, dass** der Dichtspalt (19) eine Breite von etwa 50 µm bis 4 mm aufweist und das elastische Dichtelement (17) durch einen Werkstoff mit einer Shore-Härte von etwa 20 bis 100 Shore A gebildet wird.

11. Elektrochemischer Energiewandler enthaltend eine Brennstoffzelle oder mehrere als Stapel angeordnete Brennstoffzellen mit einer Dichtungsanordnung nach einem der Ansprüche 1 bis 10.

12. Verfahren zur Herstellung einer Dichtungsanordnung für eine Brennstoffzelle oder für einen Stapel von Brennstoffzellen, **gekennzeichnet durch** die Schritte:
a) Beschichten oder Teilimprägnieren oder Durchtränken eines Randbereiches von zwei porösen, gasdurchlässigen Platten (2, 3) mit einem ersten polymeren Dichtungsmaterial,
b) Bilden einer Membran-Elektroden-Einheit (18) **durch** Zusammenfügen von zwei porösen Platten (2, 3) mit einer dazwischengelegten lonenaustauschmembran (5), wobei die Umfangsseitenflächen (8) der lonenaustauschmembran (5) gegenüber den Umfangsseitenflächen (7, 9) der porösen Platten (2,3) zurückspringend angeordnet sind,
c) Bilden einer Einheit **durch** Zusammenfügen von zwei Zell-Trennplatten (1, 4) mit dazwischengelegter in b) gebildeter Membran-Elektroden-Einheit (18), wobei die Umfangsseitenflächen (7, 8, 9) der Membran-Elektroden-Einheit gegenüber den Umfangsseitenflächen (6, 10) der Zell-Trennplatten zurückspringend angeordnet sind,
d) Einlegen der Einheit oder eines Stapels, gebildet aus mehreren dieser Einheiten, in die Kavität eines Spritzgusswerkzeuges,
e) Pressen der Einheit oder der Einheiten in der Kavität mit einem Anpressdruck, bis das polymere Dichtungsmaterial einem Einspritzdruck mit einem zweiten polymeren Dichtungsmaterial standhält,
f) Bilden eines Verbundes (40) oder von Verbünden (40') **durch** Einspritzen einer Schmelze eines zweiten polymeren Dichtungsmaterials in die Kavität des Spritzgusswerkzeuges,
g) Erstarren lassen der Schmelze, wobei ein Dichtelement (17) entsteht, das den Verbund (40) oder die Verbünde (40') umlaufend umschließt, wobei die Umfangsseitenflächen (7, 8, 9) der Membran-Elektroden-Einheit gegenüber den Umfangsseitenflächen (6, 10) der Zell-Trennplatten zurückspringend angeordnet sind,
h) Entformen und Entnahme des in f) gebildeten Verbundes (40) oder der Verbünde (40') von Brennstoffzellen.
i) Erforderlichenfalls weiteres Ausheizen der Dichtungsanordnung.

13. Verfahren zur Herstellung einer Dichtungsanordnung für eine Brennstoffzelle oder für einen Stapel von Brennstoffzellen, **gekennzeichnet durch** die Schritte:
a) Mit einem ersten polymeren Dichtungsmaterial Beschichten oder Teilimprägnieren oder Durchtränken eines Randbereiches von einer Membran-Elektroden-Einheit (18), wobei die Umfangsseitenflächen (8) der Ionenaustauschmembran (5) gegenüber den Umfangsseitenflächen (7, 9) der porösen Platten (2, 3) zurückspringend angeordnet sind,
b) Bilden einer zweiten Einheit **durch** Zusammenfügen von zwei Zell-Trennplatten (1, 4) mit dazwischengelegter in a) gebildeter Membran-Elektroden-Einheit (18), wobei die Umfangsseitenflächen (7, 8, 9) der Membran-Elektroden-Einheit gegenüber den Umfangsseitenflächen (6, 10) der Zell-Trennplatten zurückspringend angeordnet sind,
c) Einlegen der zweiten Einheit oder eines Stapels, gebildet aus mehreren dieser zweiten Einheiten in die Kavität eines Spritzgusswerkzeuges,
d) Pressen der Einheit oder der Einheiten in der Kavität mit einem Anpressdruck, bis das polymere Dichtungsmaterial einem Einspritzdruck mit einem zweiten polymeren Dichtungsmaterial standhält,
e) Bilden eines Verbundes (40) oder von Verbünden (40') **durch** Einspritzen einer Schmelze eines zweiten polymeren Dichtungsmaterials in die Kavität des Spritzgusswerkzeug,
f) Erstarren lassen der Schmelze, wobei ein Dichtelement (17) entsteht, das den Verbund (40) oder die Verbünde (40') umlaufend umschließt,
g) Entformen und Entnahme des in f) gebildeten Verbundes (40) oder der Verbünde (40') von Brennstoffzellen,
h) Erforderlichenfalls weiteres Ausheizen der Dichtungsanordnung.

14. Verfahren nach Anspruch 13 oder 14, **dadurch gekennzeichnet, dass** das Beschichten im jeweiligen Verfahrensschritt a) durch Siebdrucken, besonders bevorzugt durch Rotationssiebdrucken, ganz besonders bevorzugt durch ein Hochdruckverfahren oder durch ein Stempeldruckverfahren erfolgt.

15. Verfahren nach Anspruch 13 oder 14, **dadurch gekennzeichnet, dass** das Durchtränken im jeweiligen Verfahrensschritt a) durch Tauchen oder durch Spritzgießen erfolgt.

16. Verfahren nach Anspruch 13 oder 14, **dadurch gekennzeichnet, dass** jeweils für in a) hergestellte Beschichtung oder in f) gebildeten Verbund (40) oder Verbünde (40') der Werkstoff FPM (Fluor-Kautschuk), EPDM (Ethylen-Propylen-Dien-Kautschuk), Silikon, PTFE (Polytetrafluorethylen), Epoxyd-Harz oder TPE (Thermoplastisches Elastomer) verwendet wird.

17. Verfahren nach einem der Ansprüche 13 bis 16, **dadurch gekennzeichnet, dass** für Beschichtung und Verbund bzw. Verbünde gleicher Werkstoff verwendet wird.

## Claims

1. Sealing arrangement for fuel cells, containing
- at least one composite (40) formed from two cell-separating plates (1, 4; BPP) with a deformable membrane electrode unit (18; MEA) placed in between, the membrane electrode unit being composed of two porous, gas-permeable plates or layers (2, 3; GDL) and an ion exchange membrane (5; PEM) placed in between, wherein the side surfaces (7, 8, 9) of the membrane electrode unit are set back in relation to the side surfaces (6, 10) of the cell-separating plates in order to leave free a sealing gap (19),
- an elastic sealing element (17) composed of a first polymer, which surrounds the composite in the manner of an encircling sealing tape (28), wherein the sealing element (17) has an encircling sealing strip (20) which projects into the sealing gap (19) in order to seal the sealing gap (19) in a gas-tight manner by compression between the cell-separating plates (1, 4; BPP),
**characterized in that** the porous, gas-permeable plates (2, 3) are each impregnated and/or coated with a second polymer on one side (15, 16) or on two sides (15, 15', 16, 16') in an end region (35, 36) (Fig. 1), the side surface (8) of the ion exchange membrane (5) is set back in relation to the side surfaces (7, 9) of the porous plates (2, 3) and leaves free a second sealing gap (21) into which a second sealing strip (31) projects in order to seal the second sealing gap (21) in a gas-tight manner by compression between the porous plates.

2. Sealing arrangement according to Claim 1, **characterized in that** the sealing tape (28) and the sealing strip (20) are integrally formed as an injection-moulded part from the same material, and the sealing strip (20) completely fills the sealing gap (19).

3. Sealing arrangement according to Claim 1 or 2, **characterized in that** the sealing element (17) extends over an outer edge (11) of an end surface (12) of an outer cell-separating plate (1) and over an outer edge (26) of an end surface (22) of an outer cell-separating plate (4) in order to hold together the composite or the composites by clamping.

4. Sealing arrangement according to one of Claims 1 to 3, **characterized in that** the sealing element (17) is designed with an encircling sealing profile (25) in the region of a first clamp edge (23) and as a planar surface (27) in the region of a second clamp edge (24).

5. Sealing arrangement according to one of Claims 2 to 4, **characterized in that** the first polymer is composed of an elastomer, particularly preferably of EPDM (ethylene-propylene-diene rubber), FPM (fluorocarbon rubber), TPE (thermoplastic elastomer) or of silicone or of a plastic, very particularly preferably of epoxy resin.

6. Sealing arrangement according to one of Claims 1 to 5, **characterized in that** the porous plates (2, 3) are completely soaked in an end region (35, 36) by the second polymer.

7. Sealing arrangement according to Claim 6, **characterized in that** the second polymer is formed by silicone or FPM (fluorocarbon rubber) or epoxy resin or PTFE (polytetrafluoroethylene).

8. Sealing arrangement according to one of Claims 2 to 5 and 6 or 7, **characterized in that** the materials of the first polymer and of the second polymer are the same.

9. Sealing arrangement according to one of the preceding claims, **characterized in that** the sealing element (17) is connected in a firmly adhering manner to the side surfaces (6, 7, 8, 9, 10) and the pressing surfaces (29, 30) in order to seal the composite and hold it together.

10. Sealing arrangement according to one of the preceding claims, **characterized in that** the sealing gap (19) has a width of approximately 50 µm to 4 mm, and the elastic sealing element (17) is formed by a material with a Shore A hardness of approximately 20 to 100.

11. Electrochemical energy converter, containing one fuel cell or more than one fuel cell, are arranged in the form of a stack, with a sealing arrangement according to one of Claims 1 to 10.

12. Method for producing a sealing arrangement for a fuel cell or for a stack of fuel cells, **characterized by** the following steps:
a) coating or partially impregnating or soaking an edge region of two porous, gas-permeable plates (2, 3) with a first polymeric sealing material,
b) forming a membrane electrode unit (18) by joining two porous plates (2, 3) with an ion exchange membrane (5) placed in between, with the circumferential side surfaces (8) of the ion exchange membrane (5) being arranged such that they are set back in relation to the circumferential side surfaces (7, 9) of the porous plates (2, 3),
c) forming a unit by joining two cell-separating plates (1, 4) with a membrane electrode unit (18) formed in b) being placed in between, with the circumferential side surfaces (7, 8, 9) of the membrane electrode unit being arranged such that they are set back in relation to the circumferential side surfaces (6, 10) of the cell-separating plates,
d) inserting the unit or a stack formed from a plurality of said units into the cavity of an injection mould,
e) pressing the unit or the units in the cavity with a contact pressure until the polymeric sealing material is capable of withstanding an injection pressure with a second polymeric sealing material,
f) forming a composite (40) or composites (40') by injecting a melt of a second polymeric sealing material into the cavity of the injection mould,
g) solidifying the melt, with a sealing element (17) being produced which surrounds the composite (40) or the composites (40') in an encircling manner,
h) demoulding and removing the composite (40) or the composites (40') of fuel cells formed in f),
i) if required, further annealing of the sealing arrangement.

13. Method for producing a sealing arrangement for a fuel cell or for a stack of fuel cells, **characterized by** the following steps:
a) coating or partially impregnating or soaking an edge region of a membrane electrode unit (18) with a first polymeric sealing material, with the circumferential side surfaces (8) of the ion exchange membrane (5) being arranged such that they are set back in relation to the circumferential side surfaces (7, 9) of the porous plates (2, 3),
b) forming a second unit by joining two cell-separating plates (1, 4) with a membrane electrode unit (18) formed in a) being placed in between, with the circumferential side surfaces (7, 8, 9) of the membrane electrode unit being arranged such that they are set back in relation to the circumferential side surfaces (6, 10) of the cell-separating plates,
c) inserting the second unit or a stack formed from a plurality of said second units into the cavity of an injection mould,
d) pressing the unit or the units in the cavity with a contact pressure until the polymeric sealing material is capable of withstanding an injection pressure with a second polymeric sealing material,
e) forming a composite (40) or composites (40') by injecting a melt of a second polymeric sealing material into the cavity of the injection mould,
f) solidifying the melt, with a sealing element (17) being produced which surrounds the composite (40) or the composites (40') in an encircling manner,
g) demoulding and removing the composite (40) or the composites (40') of fuel cells formed in f),
h) if required, further annealing of the sealing arrangement.

14. Method according to Claim 12 or 13, **characterized in that** the coating in respective method step a) takes place by screen printing, particularly preferably by rotary screen printing, very particularly preferably by a high-pressure process or by a stamp printing process.

15. Method according to Claim 13 or 14, **characterized in that** the soaking in respective method step a) takes place by dipping or by injection moulding.

16. Method according to Claim 13 or 14, **characterized in that** the material FPM (fluorocarbon rubber), EPDM (ethylene-propylene-diene rubber), silicone, PTFE (polytetrafluoroethylene), epoxy resin or TPE (thermoplastic elastomer) is used in each case for the coating produced in a) or the composite (40) or composites (40') formed in f).

17. Method according to one of Claims 13 to 16, **characterized in that** the same material is used for coating and composite or composites.

## Revendications

1. Système de joint d'étanchéité pour cellules à combustible, qui contient :
- au moins un ensemble (40) formé de deux plaques (1, 4 ; BPP) de séparation de cellules entre lesquelles est placée une unité d'électrode à membrane déformable (18 ; MEA), constitué de deux plaques ou couches (2, 3 ; GDL) poreuses et perméables au gaz entre lesquelles est disposée une membrane (5; PEM) d'échange d'ions, les surfaces latérales (7, 8, 9) de l'unité d'électrode à membrane étant en retrait par rapport aux surfaces latérales (6, 10) des plaques de séparation de cellules pour libérer un interstice d'étanchéité (19),
- un élément élastique d'étanchéité (17) en un premier polymère qui entoure l'ensemble sous la forme d'un ruban périphérique d'étanchéité (28), l'élément d'étanchéité (17) présentant une languette périphérique d'étanchéité (20) qui s'enfonce dans l'interstice d'étanchéité (19) pour fermer de manière étanche au gaz l'interstice d'étanchéité (19) en le comprimant entre les plaques (1, 4; BPP) de séparation de cellules,
**caractérisé en ce que**
une face (15, 16) ou deux faces (15, 15', 16, 16') des plaques poreuses et perméables au gaz (2, 3) sont imprégnées et/ou revêtues (figure 1) d'un deuxième polymère à chaque fois dans une partie d'extrémité (35, 36), **en ce que** la surface latérale (8) de la membrane (5) d'échange d'ions est en retrait par rapport aux surfaces latérales (7, 9) des plaques poreuses (2, 3) et libère un deuxième interstice d'étanchéité (21) dans lequel s'enfonce une deuxième languette d'étanchéité (31) pour fermer de manière étanche au gaz le deuxième interstice d'étanchéité (21) en le comprimant entre les plaques poreuses.

2. Système de joint d'étanchéité selon la revendication 1, **caractérisé en ce que** le ruban d'étanchéité (28) et la languette d'étanchéité (20) sont formés d'une seule pièce et en un seul matériau sous la forme d'une pièce moulée par injection, la languette d'étanchéité (20) remplissant complètement l'interstice d'étanchéité (19).

3. Système de joint d'étanchéité selon les revendications 1 ou 2, **caractérisé en ce que** l'élément d'étanchéité (17) s'étend sur le bord extérieur (11) d'une surface frontale (12) d'une plaque extérieure (1) de séparation de cellules et sur le bord extérieur (26) d'une surface frontale (22) d'une plaque extérieure (4) de séparation de cellules pour maintenir assemblés le ou les ensembles en forme de pince.

4. Système de joint d'étanchéité selon l'une des revendications 1 à 3, **caractérisé en ce que** l'élément d'étanchéité (17) est configuré avec un profil périphérique d'étanchéité (25) dans la zone occupée par un premier bord de pinçage (23) et comme une surface plane (27) dans la zone occupée par un deuxième bord de pinçage (24).

5. Système de joint d'étanchéité selon l'une des revendications 2 à 4, **caractérisé en ce que** le premier polymère est constitué d'un élastomère, de façon particulièrement préférable d'un EPDM (caoutchouc d'éthylène-propylène-diène), d'un FPM (caoutchouc fluoré), d'un TPE (élastomère thermoplastique), de silicone ou d'une matière synthétique et de façon tout particulièrement préférable d'une.résine époxy.

6. Système de joint d'étanchéité selon l'une des revendications 1 à 5, **caractérisé en ce que** les plaques poreuses (2, 3) sont complètement imprégnées du deuxième polymère dans une partie d'extrémité (35, 36).

7. Système de joint d'étanchéité selon la revendication 6, **caractérisé en ce que** le deuxième polymère est formé de silicone ou de FPM (caoutchouc fluoré), de résine époxy ou de PTFE (polytétrafluoroéthylène).

8. Système de joint d'étanchéité selon l'une des revendications 2 à 5 et 6 ou 7, **caractérisé en ce que** le premier polymère et le deuxième polymère sont le même matériau.

9. Système de joint d'étanchéité selon l'une des revendications précédentes, **caractérisé en ce que** l'élément d'étanchéité (17) est relié de façon fermement adhérente aux surfaces latérales (6, 7, 8, 9, 10) et aux surfaces de compression (29, 30) pour rendre l'ensemble étanche et le maintenir assemblé.

10. Système de joint d'étanchéité selon l'une des revendications précédentes, **caractérisé en ce que** l'interstice d'étanchéité (19) a une largeur d'environ 50 µm à 4 mm et **en ce que** l'élément élastique d'étanchéité (17) est formé d'un matériau dont la dureté Shore est comprise entre environ 20 et 100 Shore A.

11. Convertisseur électrochimique d'énergie qui contient une cellule à combustible ou plusieurs cellules à combustible disposées en pile et doté d'un système de joint d'étanchéité selon l'une des revendications 1 à 10.

12. Procédé de fabrication d'un système de joint d'étanchéité pour une cellule à combustible ou pour une pile de cellules à combustible, **caractérisé par** les étapes qui consistent à :
a) revêtir ou imprégner partiellement ou complètement d'un premier matériau polymère d'étanchéité une zone de bord de deux plaques poreuses (2, 3) perméables au gaz,
b) former une unité (18) d'électrode à membrane en assemblant deux plaques poreuses (2, 3) après y avoir intercalé une membrane (5) d'échange d'ions, les surfaces périphériques latérales (8) de la membrane (5) d'échange d'ions étant disposées en retrait par rapport aux surfaces périphériques latérales (7, 9) des plaques poreuses (2, 3),
c) former une unité par assemblage de deux plaques (1, 4) de séparation de cellules entre lesquelles est intercalée une unité (18) d'électrode à membrane formée selon b), les surfaces périphériques latérales (7, 8, 9) de l'unité d'électrode à membrane étant disposées en retrait par rapport aux surfaces périphériques latérales (6, 10) des plaques de séparation de cellules,
d) placer l'unité ou une pile formée de plusieurs de ces unités dans la cavité d'un outil de moulage par injection,
e) repousser l'unité ou les unités dans la cavité sous une poussée de pressage jusqu'à ce que le matériau polymère d'étanchéité résiste à la pression d'injection d'un deuxième matériau polymère d'étanchéité,
f) former un ensemble (40) ou des ensembles (40') en injectant un deuxième matériau polymère d'étanchéité fondu dans la cavité de l'outil de moulage par injection,
g) laisser se solidifier la matière fondue, ce qui fournit un élément d'étanchéité (17) qui entoure la périphérie de l'ensemble (40) ou des ensembles (40'),
h) démouler et enlever l'ensemble (40) ou les ensembles (40') de cellules à combustible formés selon f) et
i) si nécessaire, poursuivre le chauffage du système de joint d'étanchéité.

13. Procédé de fabrication d'un système de joint d'étanchéité pour une cellule à combustible ou pour une pile de cellules à combustible, **caractérisé par** les étapes qui consistent à :
a) revêtir ou imprégner partiellement ou totalement d'un premier matériau polymère d'étanchéité une zone de bord d'une unité (18) d'électrode à membrane, les surfaces périphériques latérales (8) de la membrane (5) d'échange d'ions étant disposées en retrait par rapport aux surfaces périphériques latérales (7, 9) des plaques poreuses (2, 3),
b) former une deuxième unité par assemblage de deux plaques (1, 4) de séparation de cellules avec une unité (18) d'électrode à membrane formée selon a) intercalée entre elles, les surfaces périphériques latérales (7, 8, 9) de l'unité d'électrode à membrane étant disposées en retrait par rapport aux surfaces périphériques latérales (6, 10) des plaques de séparation de cellules,
c) placer la deuxième unité ou une pile formée de plusieurs de ces deuxièmes unités dans la cavité d'un outil de moulage par injection,
d) repousser l'unité ou les unités dans la cavité sous une poussée de pressage jusqu'à ce que le matériau polymère d'étanchéité résiste à la pression d'injection d'un deuxième matériau polymère d'étanchéité,
e) former un ensemble (40) ou des ensembles (40') en injectant un deuxième matériau polymère d'étanchéité fondu dans la cavité de l'outil de moulage par injection,
f) laisser se solidifier la matière fondue, ce qui fournit un élément d'étanchéité (17) qui entoure la périphérie de l'ensemble (40) ou des ensembles (40'),
g) démouler et enlever l'ensemble (40) ou les ensembles (40') de cellules à combustible formés selon f) et
h) si nécessaire, poursuivre le chauffage du système de joint d'étanchéité.

14. Procédé selon les revendications 12 ou 13, **caractérisé en ce que** le revêtement dans l'étape respective a) du procédé s'effectue par sérigraphie, de façon particulièrement préférable par sérigraphie rotative et de façon tout particulièrement préférable par un procédé sous haute pression ou par un procédé au poussoir-tampon.

15. Procédé selon les revendications 13 ou 14, **caractérisé en ce que** l'imprégnation de l'étape respective de procédé a) s'effectue par immersion ou par moulage par injection.

16. Procédé selon les revendications 13 ou 14, **caractérisé en ce que** pour le revêtement réalisé selon a) ou l'ensemble (40) ou les ensembles (40') formés selon f), on utilise comme matériaux un FPM (caoutchouc fluoré), un EPDM (caoutchouc d'éthylène-propylène-diène), un silicone, le PTFE (polytétrafluoroéthylène), une résine époxy ou un TPE (élastomère thermoplastique).

17. Procédé selon l'une des revendications 13 à 16, **caractérisé en ce que** pour le revêtement, l'ensemble ou les ensembles, on utilise le même matériau.
